# EUROPEAN PATENT APPLICATION

(11) **EP 1 011 286 A2**
(43) Date of publication of application: **21.06.2000**
(21) Application number: 99125305.5
(22) Date of filing: 17.12.1999
(51) Int. Cl.: H04Q 7/38

(54) **Mobile wireless apparatus, base station wireless apparatus, and recording medium thereof**

(30) Priority: 18.12.1998 JP 36165898
(71) Applicant: Mitsubishi Materials Corporation, Chiyoda-ku, Tokyo 100-004 (JP)
(72) Inventor: Tari, Kazuyoshi, c/o Mitsubishi Materials Corp., Omiya-shi, Saitama 330-0835 (JP); Unoki, Hiroyuki, c/o Mitsubishi Materials Corp., Omiya-shi, Saitama 330-0835 (JP); Nagira, Tumoru, c/o Mitsubishi Materials Corp., Omiya-shi, Saitama 330-0835 (JP)
(74) Representative: HOFFMANN - EITLE

(57) **Abstract**

A mobile wireless apparatus (M) includes a receiving unit (Ma) for receiving a radio signal, a PLL unit (Mb) used for demodulating the radio signal, a storage unit (Mf) for storing channel information of a base station wireless apparatus (A) and electrical field intensity information, a first data analyzing unit (Mc) for obtaining a destination of received data and storing it in the storage unit (Mf), a second data analyzing unit (Md) for obtaining channel information of another base station wireless apparatus and storing it in the storage unit (Mf), and an electrical field intensity measuring unit (Me) for measuring the electrical field intensity of the signal received by the receiving unit (Ma) and storing it in the storage unit (Mf). The base station wireless apparatus (A) transmits channel information to which an index in accordance with the distance to another base station wireless apparatus is added.

## Description

The present invention relates to a base station wireless apparatus, which is an element of a mobile communication system utilizing a network such as the Internet, and to a mobile wireless apparatus for performing wireless communication with the base station wireless apparatus.

The present assignee has applied for a wireless communication system, which is employed when establishing a Link between a terminal unit and the Internet by means of wireless communication, in Japanese Patent Application No. 10-262099. Features of this wireless communication system are described below.

The wireless communication system includes at least one wireless server connected to the Internet and a base station wireless apparatus connected to the wireless server, which performs wireless communication with a mobile wireless apparatus connected to a terminal unit. One of at least one wireless server is assigned as a home wireless server. Wireless communication is performed with the mobile wireless apparatus in a communication area covered by the base station wireless apparatus in the home wireless server, thereby establishing a link between the terminal unit and the Internet.

The above wireless server includes a terminal authentication managing unit for authenticating, when connecting the terminal unit, connection of the terminal unit in accordance with a registration request from the terminal unit, and a terminal managing unit for issuing an IP address available at that time in accordance with an IP address issue request from the terminal unit and then registering the connection of the terminal unit.

When a registration request is made by the terminal unit to a wireless server other than the home wireless server, the above wireless server requests the home wireless server of the terminal unit via the Internet to authenticate the connection and to issue the IP address. When the home wireless server has authenticated the connection and issued the IP address, the terminal unit is permitted to be connected to another wireless server, other than the home wireless server.

The above wireless server further includes a routing unit. When the terminal unit is connected to a wireless server other than the home wireless server, the routing unit forwards, upon the reception of packet data addressed to the terminal unit by the wireless server to which the terminal unit had been previously connected, the packet data to the wireless server to which the terminal unit is currently connected based on the IP address obtained from the home wireless server.

When the packet data addressed to the terminal unit is forwarded from the wireless server while the terminal unit is connected to a wireless server other than the home wireless server, the above wireless server notifies a host on the Internet, which has sent the packet data, about the wireless server to which the terminal unit is currently connected. The above wireless server directly transmits packet data, which are transmitted after this notification, to the wireless server to which the terminal unit is connected, without the intermediary of the wireless server to which the terminal unit had been previously connected.

Control channels are not determined in the wireless communication system described above. In contrast, a typical example of general wireless communication systems has a predetermined bandwidth for an operating radio frequency and predetermined control channels. When a mobile wireless apparatus moves outside the in-service area covered by the general wireless communication system, the control channels are scanned one after another and a connectable channel is thereby detected.

The channel detecting method for the above general wireless communication system is performed by scanning the control channels one by one and then detecting the connectable channel. Hence, it requires time for the channel detection. Because the above-proposed wireless communication system is not provided with a predetermined control channel, the mobile wireless apparatus is required to store channel information, e.g., frequency, which should be detected. The channel detection is also influenced by selection of base station wireless apparatuses for storing channel information thereof.

Accordingly, it is an object of the present invention to provide a mobile wireless apparatus for detecting a receivable channel based on pre-obtained electrical field intensity information when the mobile wireless apparatus moves outside an in-service area, and a base station wireless apparatus for transmitting a packet to which information is added so that the mobile wireless apparatus may preferably detect a nearer base station wireless apparatus around the periphery.

In one aspect of the present invention, there is provided a mobile wireless apparatus for performing wireless communication with a base station wireless apparatus, thus establishing a link between a terminal unit and the Internet, in a wireless communication system including at least one wireless server connected to the Internet and the base station wireless apparatus connected to the wireless server, which performs wireless communication. The mobile wireless apparatus receives first data including destination information, which form a transmission packet transmitted by the base station wireless apparatus currently connected thereto by radio, and detects and determines a destination. When the destination of the transmission packet is not the mobile wireless apparatus, the mobile wireless apparatus receives a transmission channel of another base station wireless apparatus whose communication area is adjacent to that of the base station wireless apparatus during sending of second data subsequent to the first data which form the transmission packet. The mobile wireless apparatus detects and obtains electrical field intensity of the transmission channel.

Preferably, when it is determined that the destination of the transmission packet is the mobile wireless apparatus, the mobile wireless apparatus obtains and stores channel information of the other base station wireless apparatus whose communication area is adjacent to that of the base station wireless apparatus if the channel information is included in the second data; and
when it is determined that the destination of the transmission packet is not the mobile wireless apparatus, the mobile wireless apparatus may receive a transmission channel of the other base station wireless apparatus based on the channel information.

Preferably, the mobile wireless apparatus stores information on the measured electrical field intensity of the transmission channel. The mobile wireless apparatus may detect a communicable base station wireless apparatus based on the information of the electrical field intensity when the mobile wireless apparatus moves outside the communication area covered by the base station wireless apparatus.

Preferably, the mobile wireless apparatus includes a receiving unit for receiving a radio signal, outputting received data, detecting electrical field intensity of the received radio signal, and outputting electrical field intensity data. A phase locked loop (PLL) unit connected to the receiving unit switches a reception channel of the receiving unit. A storage unit stores channel information of the base station wireless apparatus and the electrical field intensity data. An electrical field intensity obtaining unit stores the electrical field intensity data in the storage unit. A first data analyzing unit obtains a destination of the received data from the first data, gives a timing signal for storing the electrical field intensity data to the electrical field intensity obtaining unit, and causes the PLL unit to switch the reception channel of the receiving unit. A second data analyzing unit obtains channel information of the other base station wireless apparatus from the second data and stores the channel information in the storage device.

In another aspect of the present invention, there is provided a base station wireless apparatus in a wireless communication system including at least one wireless server connected to the Internet and the base station wireless apparatus connected to the wireless server, which performs wireless communication with a mobile wireless apparatus connected to a terminal unit. The base station wireless apparatus adds an index to channel information, included in a transmission packet to be transmitted, of another base station wireless apparatus whose communication area is adjacent to that of the base station wireless apparatus in accordance with the distance between the base station wireless apparatus and the other base station wireless apparatus.

In another aspect of the present invention, there is provided a computer-readable medium for causing a computer to execute an electrical field intensity obtaining program in a mobile wireless apparatus. The program includes the steps of analyzing a packet transmitted from a base station wireless apparatus, determining a destination of the packet, and detecting and storing an electrical field intensity of a transmission channel of another base station wireless apparatus during sending of the packet when the destination or the packet is not the mobile wireless apparatus.

In another aspect of the present invention, there is provided a computer-readable medium for causing a computer to execute an index addition program in a base station wireless apparatus. The program includes the steps of obtaining positional information in accordance with a distance between the base station wireless apparatus and another peripheral base station wireless apparatus, adding an index to channel information included in a transmission packet based on the positional information in accordance with the distance between the base station wireless apparatuses and the other peripheral wireless apparatus, and transmitting the transmission packet including the channel information to which the index is added.
Fig. 1 is a block diagram of a mobile wireless apparatus according to an embodiment of the present invention;
Fig. 2 illustrates communication areas covered by a base station wireless apparatus **A** and by other base station wireless apparatuses;
Fig. 3 illustrates timing of a signal transmitted through a transmission channel of the base station wireless apparatus and timing of the operation of the mobile wireless apparatus;
Fig. 4 is a flowchart showing the operation of the mobile wireless apparatus;
Fig. 5 is a block diagram of a wireless communication system according to an embodiment of the present invention:
Fig. 6 illustrates a packet transmission process in the above embodiment;
Fig. 7 is a flowchart showing the packet transmission process in the above embodiment;
Fig. 8 is a flowchart showing the packet transmission process in the above embodiment;
Fig. 9 is a flowchart showing the packet transmission process in the above embodiment;
Fig. 10 is a flowchart showing the packet transmission process in the above embodiment;
Fig. 11 illustrates a process for issuing an address in the above embodiment;
Fig. 12 illustrates the operation of terminal unit authentication in the above embodiment; and
Fig. 13 illustrates the operation of terminal unit authentication in the above embodiment.

The present invention will become clear from the following description of the preferred embodiments with reference to the accompanying drawings.

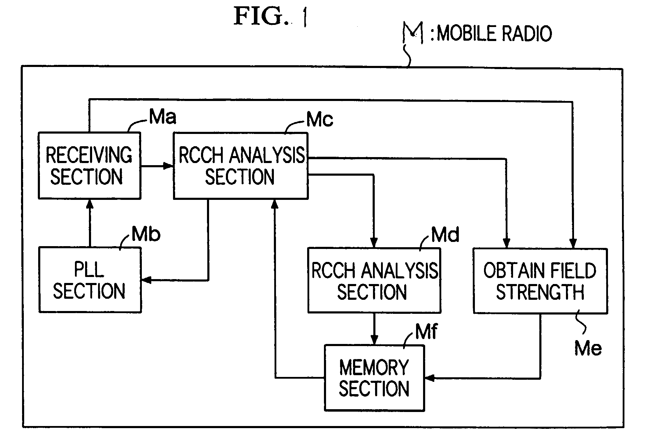

Fig. 1 is a block diagram of a mobile wireless apparatus **M** according to an embodiment of the present invention. The mobile wireless apparatus **M** is employed in a wireless communication system as described in the above related art. Details of the mobile wireless apparatus **M** are described hereinafter.

Transmission packets transmitted from a base station wireless apparatus are described. The transmission packets are sent one after another through a transmission channel of the base station wireless apparatus. One frame for each transmission packet includes a set of a unique word (UW) and a radio control channel (RCCH) and a set of a common control channel (CCCH) or a user packet channel (UPCH) subsequent to the set of the UW and the RCCH. The UW is a bit string employed to synchronize frames. The UW is at the head of each frame. The UW is defined as a bit string that has a specific value. The RCCH includes information that indicates the state of radio links and designates a destination mobile wireless apparatus. The RCCH is received by all the mobile wireless apparatuses. The CCCH includes control information, e.g., a call request, and channel information of peripheral base station wireless apparatuses. The CCCH is received by at least one mobile wireless apparatus designated by the RCCH. The UPCH includes data to be transmitted to the mobile wireless apparatus. The UPCH is received by at least one mobile wireless apparatus designated by the RCCH.

Next, a structure of the mobile wireless apparatus **M** of this embodiment is described. The mobile wireless apparatus **M** includes the following: a receiving unit **Ma** for receiving a radio signal (transmission packet), outputting received data, detecting electrical field intensity of the received radio signal, and outputting electrical field intensity data; a phase locked loop (PLL) unit **Mb** connected to the receiving unit **Ma,** which switches a reception channel of the receiving unit **Ma**; a storage unit **Mf** for storing channel information, e.g., frequency, of the base station wireless apparatus and the electrical field intensity data; an electrical field intensity obtaining unit **Me** for storing the electrical field intensity data in the storage unit **Mf**; an RCCH analyzing unit **Mc** for analyzing the RCCH included in the received data to obtain a destination or the like, giving a timing signal to the electrical field intensity obtaining unit **Me** for storing the electrical field intensity data, and causing the PLL unit **Mb** to switch the reception channel of the receiving unit **Ma** based on the channel information stored in the storage unit **Mf;** and a CCCH analyzing unit **Md** for analyzing the CCCH included in the received data when the RCCH analyzing unit **Mc** determines that the transmission packet is addressed to the mobile wireless apparatus **M**, obtaining channel information of the peripheral base stations, and storing the channel information in the storage unit **Mf**. The PLL unit **Mb** includes a phase locked loop (PLL) circuit.

It is assumed that the mobile wireless apparatus **M** stores channel information of the major base station wireless apparatuses in the storage unit **Mf** before it moves. The base station wireless apparatus or a wireless server that manages this base station wireless apparatus, forming a wireless communication system as described in the related art, includes channel information of other base station wireless apparatuses whose communication areas are adjacent to the communication area covered by the base station wireless apparatus. The base station wireless apparatus or the wireless server transmits the channel information by means of a transmission channel (down channel). The base station wireless apparatus and the mobile wireless apparatus are separately described hereinafter. The RCCH analyzing unit **Mc** operates as a first data analyzing unit. The CCCH analyzing unit **Md** operates as a second data analyzing unit. The electrical field intensity obtaining unit **Me** operates as an electrical field intensity obtaining unit.

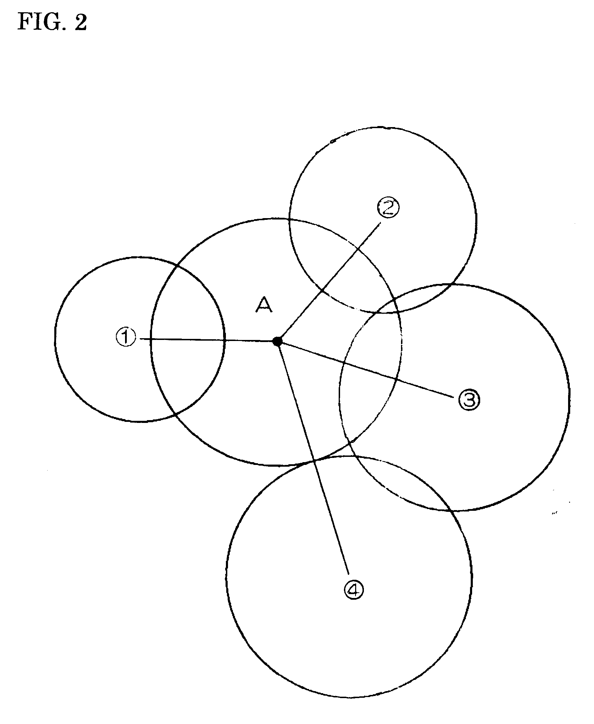

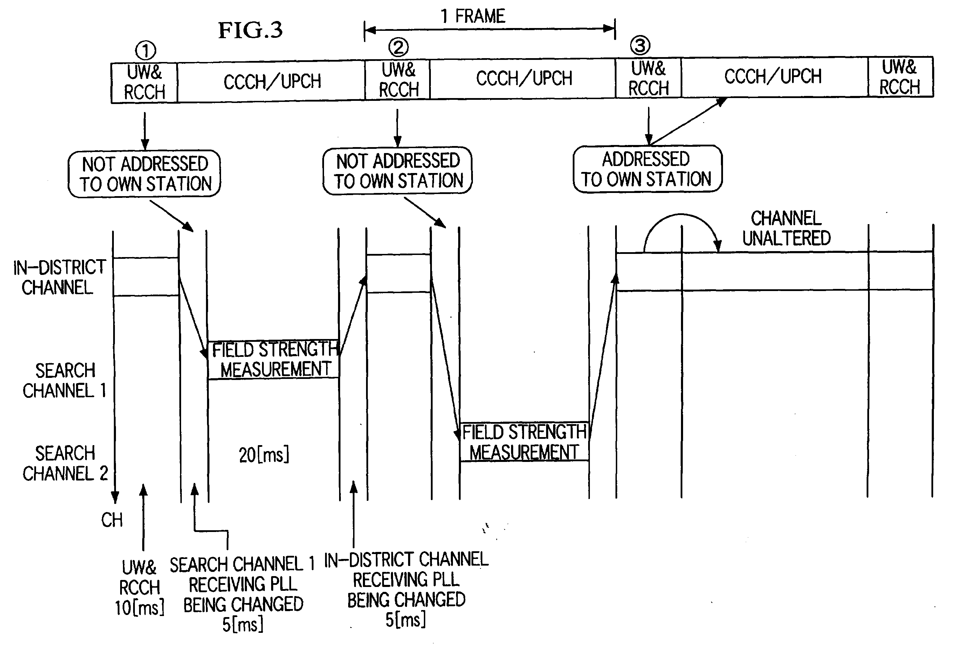

Referring to Figs. 1 to 4, the operation of the mobile wireless apparatus **M** of this embodiment is described. As illustrated in Fig. 2, in this embodiment, for example, communication areas (five are shown in Fig. 2) of a plurality of base station wireless apparatuses are adjacent to each other, and the mobile wireless apparatus **M** is in the communication area covered by a base station wireless apparatus **A**. Fig. 3 shows a transmission channel signal transmitted from the base station wireless apparatus **A**, timing for transmitting data included in the signal, and timing for obtaining the electrical, field intensity of transmission channels of other base station wireless apparatuses. Communication between the base station wireless apparatus and the mobile wireless apparatus is performed in half-duplex communication system. Specifically, the base station wireless apparatus constantly transmits packets using the transmission channel (down channel). The mobile wireless apparatus responds to the packet addressed thereto using an up channel.

For example, the mobile wireless apparatus **M** has already been connected to the base station wireless apparatus **A** by radio. The connection receiving unit **Ma** receives the transmission channel of the base station wireless apparatus **A** and receives an RCCH (1). The RCCH analyzing unit **Mc** analyzes the RCCH (1) received by the receiving unit **Ma**. In this example, the frame data of the RCCH (1) is not addressed to the mobile wireless apparatus **M**. Thus, the RCCH analyzing unit **Mc** obtains channel information of another base station wireless apparatus from the storage unit **Mf**, and controls the PLL unit **Mb** to receive a transmission channel of this base station wireless apparatus.

After a lock time period has passed since the start of the channel switching operation by the PLL unit **Mb**, the receiving unit **Ma** may receive a transmission channel of a base station wireless apparatus **B**. Specifically, after the lock time period of the PLL unit **Mb** (five milliseconds in the example shown in Fig. 3), the receiving unit **Ma** receives a transmission channel of a base station wireless apparatus, which is represented by a search channel 1 in Fig. 3 (numeral (1) in Fig. 2). The receiving unit **Ma** always detects the electrical field intensity of the radio signal and outputs it to the electrical field intensity obtaining unit **Me**. Search channels 1, 2, and so forth correspond to transmission channels (frequencies) of other base station wireless apparatuses whose communication areas are adjacent to the communication area of the base station wireless apparatus **A** to which the mobile wireless apparatus **M** is connected by radio. An in-service-area channel represents The transmission channel (frequency) of the base station wireless apparatus **A**. Since the RCCH analyzing unit **Mc** controls the PLL unit **Mb**, the RCCH analyzing unit **Mc** knows lock timing of the PLL unit **Mb**. The RCCH analyzing unit **Mc** sends a signal for designating a timing for obtaining the electrical field intensity to the electrical field intensity obtaining unit **Me**. The electrical field intensity obtaining unit **Me** stores electrical field intensity data sent from the receiving unit **Ma** with the timing for obtaining the electrical field intensity in the storage unit **Mf**.

After a period of time required to obtain the electrical field intensity of the transmission channel (20 ms in the example shown in Fig. 3), the RCCH analyzing unit **Mc** obtains the channel information of the bass station wireless apparatus **A** from the storage unit **Mf,** and controls the PLL unit **Mb** to receive the transmission channel of the base station wireless apparatus **A**. After the look time period of the PLL unit **Mb** has passed, the receiving unit **Ma** receives the transmission channel of the base station wireless apparatus **A**, which is illustrated as an in-service area channel in Fig. 3.

The receiving unit **Ma** receives an RCCH (2) shown in Fig. 3. After the reception of the RCCH (2), the same operation as when the above RCCH (1) is received is performed. The only exception is that, since the search channel 1 has already been detected, another transmission channel (search channel 2, represented by symbol (2) in Fig. 3) is received, and the electrical field intensity of that transmission channel is obtained. Accordingly, when the received RCCH is not addressed to the mobile wireless apparatus **M**, transmission channels of other base station wireless apparatuses are scanned one after another, thus obtaining the electrical field intensity thereof.

When the received RCCH (an RCCH (3) in Fig. 3) is addressed to the mobile wireless apparatus **M**, the electrical field intensity of a transmission channel of another base station wireless apparatus is not obtained. Instead,the CCCH or the UPCH subsequent to the RCCH (3) is received. When the data subsequent to the RCCH (3) is a CCCH, the CCCH is transferred from the RCCH analyzing unit **Mc** to the CCCH analyzing unit **Md**, which in turn analyzes the CCCH. When the CCCH includes channel information of another base station wireless apparatus whose communication area is adjacent to that of the base station wireless apparatus **A**, the channel information is stored in the storage unit **Mf**. A channel is addressed to the mobile wireless apparatus **M** when its destination is designated to the mobile wireless apparatus **M** alone, to a group including the mobile wireless apparatus **M**, and to all the mobile wireless apparatuses.

When the channel information includes an index in accordance with the distance from the base station wireless apparatus **A**, the RCCH analyzing unit **Mc** serializes the search channels based on the distance information derived from the index when obtaining the electrical field intensity. Thus, a transmission channel of a nearer base station wireless apparatus is detected firstly. This is because the mobile wireless apparatus **M** in the in-service area covered by the base station wireless apparatus **A** is likely to move into the communication area of the base station wireless apparatus nearer to the base station wireless apparatus **A**. When the CCCH is a call request addressed to the mobile wireless apparatus **M**, the mobile wireless apparatus **M** uses a transmitting unit (not shown) to respond to the call request. In the example shown in Fig. 3, channel searches may be performed a maximum of 25 times per second (1000 ms / 40 ms).

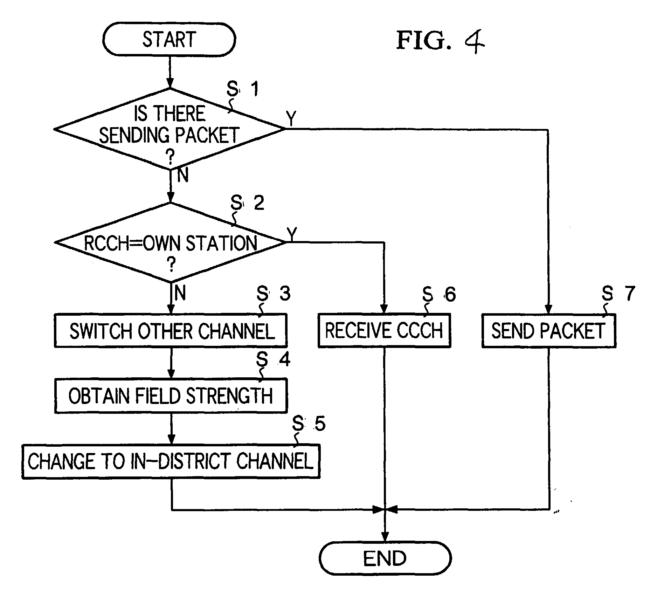

Referring now to Fig. 4, a process of the operation of the mobile wireless apparatus **M** is schematically described.

The process determines whether there is a transmission packet addressed from the mobile wireless apparatus **M** to the base station wireless apparatus **A** (step S1).

If the determination is affirmative in step S1, the transmission packet is transmitted (step S7), and the process is terminated.

If the determination is negative in step S1, a packet from the base station wireless apparatus **A** is received. The RCCH included in this packet is analyzed, and it is determined whether the packet is addressed to the mobile wireless apparatus **M** (step S2).

If the determination is affirmative in step S2, the CCCH or the UPCH subsequent to the RCCH is received (step S6). A predetermined processing is performed, and the process is terminated.

If the determination is negative in step S2, the process changes the reception channel for another base station wireless apparatus (step S3).

The process detects the electrical field intensity of the received transmission channel of the base station wireless apparatus and stores the obtained electrical field intensity (step S4). For example, an average of electrical field intensity detected for each channel in the last ten years may be stored, or alternatively, the strongest electrical field intensity in the last ten years may be stored.

The reception channel is changed back to the original base station wireless apparatus in the in-service area (step S5), and the process is terminated.

The mobile wireless apparatus **M** repeats the above process from the start to the end.

Accordingly, the mobile wireless apparatus **M** scans transmission channels of base station wireless apparatuses one after another based on the channel information stored in the storage unit **Mf**, and obtains or measures the electrical field intensity. In this operation, if the time of the CCCH or the UPCH is greater than or equal to (lock time of the PLL unit × 2 + time required to obtain electrical field intensity), the transmission channels of the base station wireless apparatuses may be scanned one after another. By way of example, when one frame has a cycle of 40 ms (a set of the UW and the RCCH is 10 ms, and the CCCH or the UPCH is 30 ms) and when the time required to obtain the electrical field intensity is 20 ms, the following is possible. If the lock time of the PLL unit **Mb** is 5 ms or less, within one frame cycle, the mobile wireless apparatus **M** may receive a transmission channel of another base station unit, obtain the electrical field intensity of the received transmission channel, and then return to the transmission channel of the base station wireless apparatus connected thereto for receiving another transmission channel.

When the mobile wireless apparatus **M** is outside the in-service area covered by the base station wireless apparatus **A** connected thereto by radio, the apparatus **M** scans channels of base station wireless apparatuses, in the above process, which have a transmittable/receivable electrical field intensity in accordance with the strength of the electrical field intensity (starting from the strongest) based on the electrical field intensity data stored in the storage unit **Mf**. Accordingly, it is not necessary to scan untransmittable/unreceivable channels. Hence, it is possible to rapidly detect channels of base station wireless apparatuses whose communication areas may be in-service areas.

The mobile wireless apparatus and the base station wireless apparatus of this embodiment are described hereinabove.

Next, a wireless communication system according to an embodiment of the present invention in which the mobile wireless apparatus and the base station wireless apparatus of the present invention are used is described below with reference to the drawings.

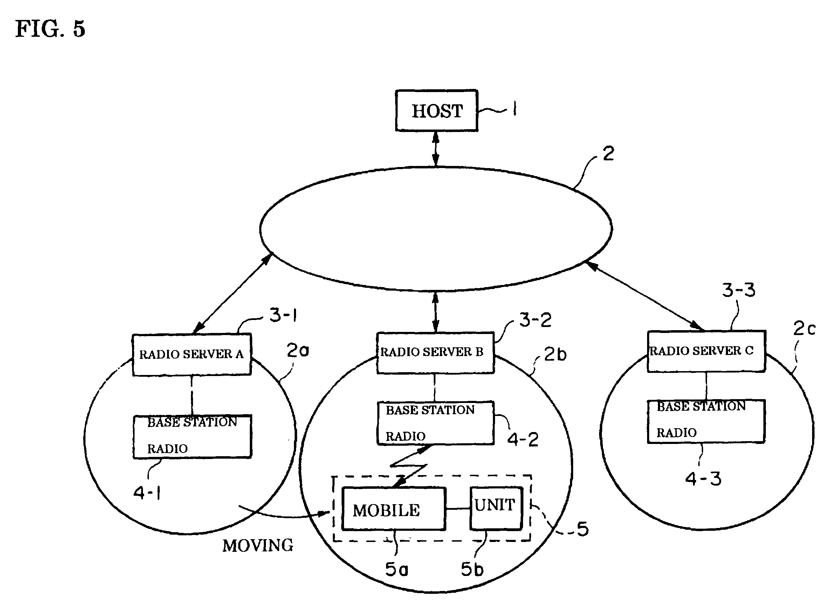

Fig. 5 is a block diagram of the wireless communication system of this embodiment. The wireless communication system includes a host server 1, a network 2 to which the host server 1 is connected, wireless servers 3-n connected to the network 2, sub networks 2a, 2b, and 2c constructed under the control of the wireless servers 3-n, and base station wireless apparatuses 4-n connected to the wireless servers 3-n. A plurality of base station wireless apparatuses 4-n are connected to one wireless server 3-n. In this example, as shown in Fig. 5, only one base station wireless apparatus 4-n is connected to one wireless server 3-n. The wireless communication system further includes a terminal unit 5 connected by radio to the wireless server 3-n. The terminal unit 5 includes a mobile wireless apparatus (hereinafter referred to as a "mobile") 5a which communicates by radio with the base station wireless apparatuses 4-n and a computer terminal unit (hereinafter referred to as a "terminal") 5b connected to the mobile 5a.

The host server 1 includes a wireless server that communicates with a terminal unit by radio, or alternatively, the host server 1 may not be provided with wireless communication capability.

The terminal unit 5 employs one of the wireless servers 3-n connected to the network 2 as a home server. In this embodiment, the home server of the terminal unit 5 is a wireless server C 3-3 shown in Fig. 5.

Wireless servers **X** and **Y** correspond to two of the wireless servers 3-n in this embodiment. The base station wireless apparatuses **A** and **B** described hereinabove correspond to two of the base station wireless apparatuses 4-n in this embodiment. The mobile wireless apparatus **M** described hereinabove corresponds to the mobile wireless apparatus 5a in this embodiment.

Referring now to Figs. 5 to 10, the operation of the communication system of this embodiment is described.

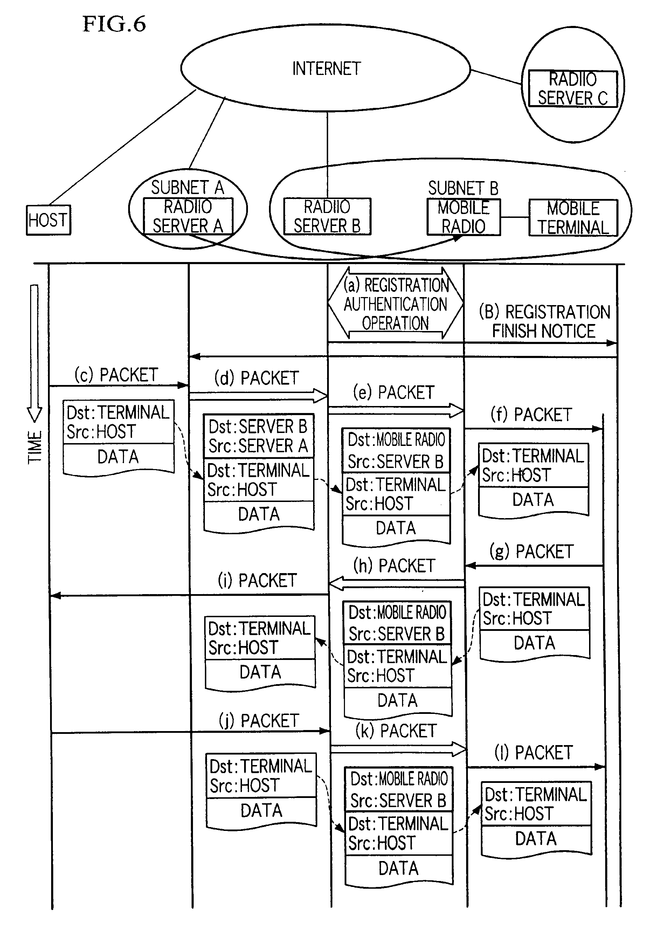

Fig. 6 illustrates the operation of the wireless communication system in accordance with variations over time. In Fig. 6, "Dst" represents a destination, and "Src" represents a source.

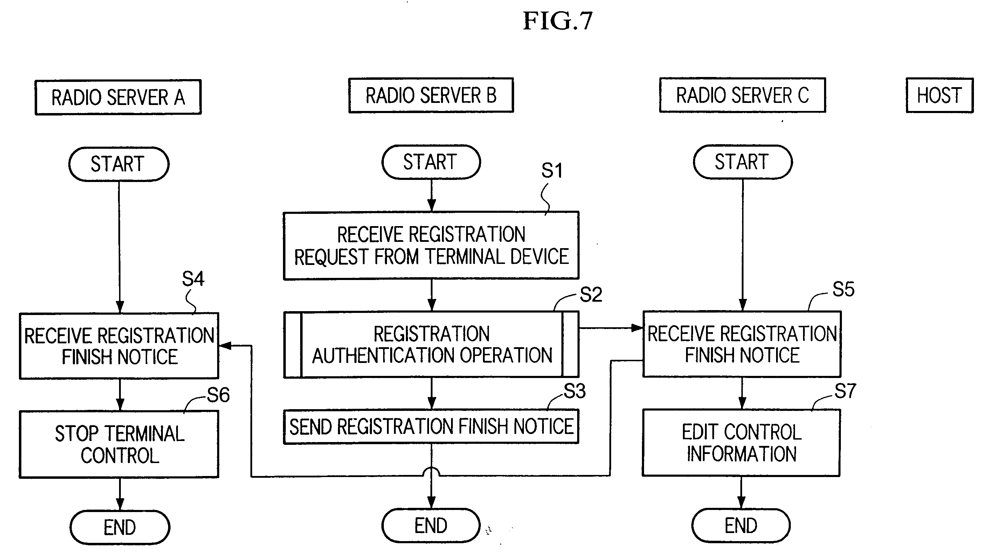

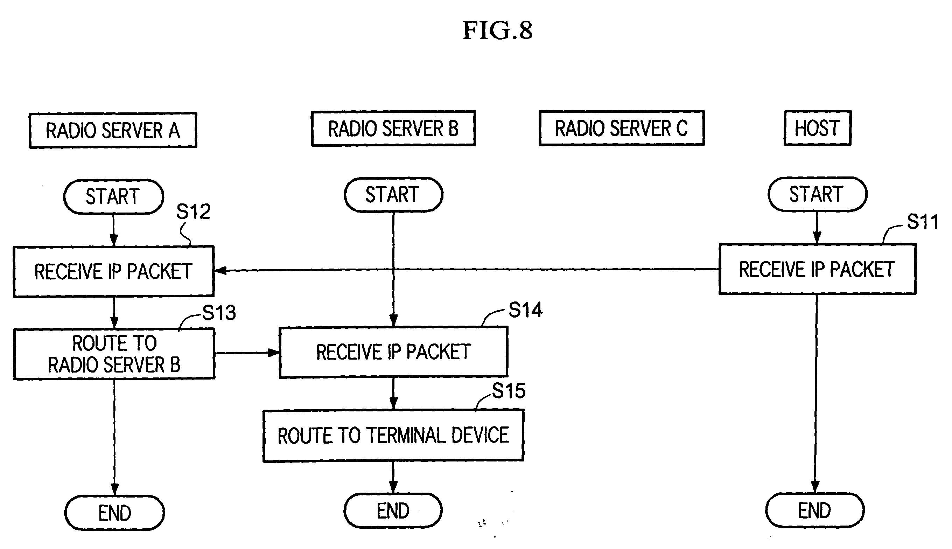

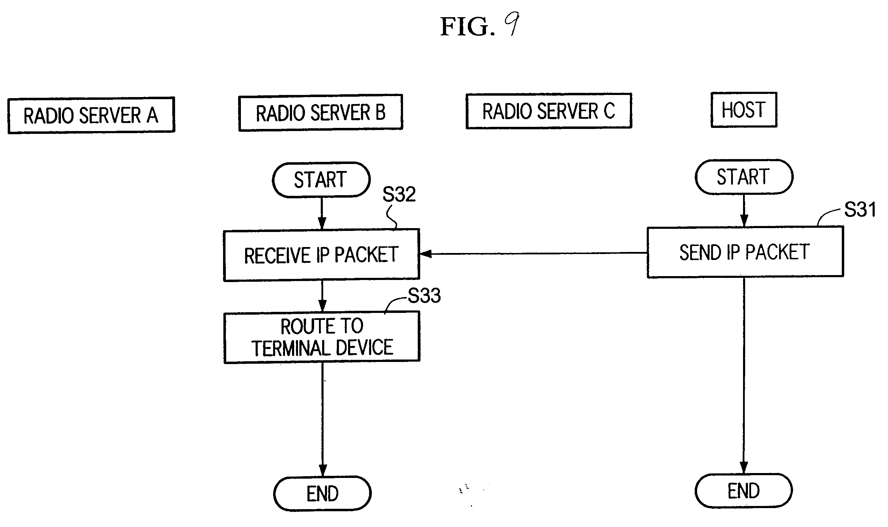

Figs. 7 to 10 are flowcharts showing a process of the operation of the wireless communication system.

It is assumed that the home server of the terminal unit 5 is the wireless server C 3-3. Currently, the terminal unit 5 is under control of a wireless server A 3-1.

By way of example, the terminal unit 5 moves from the sub network 2a of the wireless server A 3-1 to the sub network 2b of a wireless server B 3-2.

The terminal unit 5 requests the wireless server B 3-2 to authenticate a terminal registration and to issue an IP address (refer to symbol (a) in Fig. 6 and step S1 in Fig. 7). In response to the request, the wireless server B 3-2 authenticates the registration and issues the IP address (refer to symbol (a) in Fig. 6 and step S2 in Fig. 7). Hence, the terminal unit 5 operates under the control of the wireless server B 3-2.

The registration authentication operation and the IP address issuing operation are described hereinafter.

Next, the wireless server B 3-2 notifies the wireless server C 3-3 as the home server that the terminal unit 5 has moved from being under the control of the wireless server A 3-1 and is now under the control of the wireless server B 3-2, and the registration authentication is completed (refer to symbol (b) in Fig. 6 and step S3 in Fig. 7).

In accordance with the completion notification of the registration from the wireless server B 3-2, the wireless server C 3-3 as the home serer notifies the wireless server A 3-1 that the terminal unit 5 is now under the control of the wireless server B 3-2 (step S5 in Fig. 7). The wireless server A 3-1 receives the notification of the registration completion (step S4 in Fig. 7), and stops controlling the terminal unit 5 (step S6 in Fig. 7). The wireless server C 3-3 (the home wireless server) records that the terminal unit 5 is now under the control of the wireless server B 3-2, and updates control information (step S7 in Fig. 7).

Moving of the terminal unit 5 is notified via the wireless server C 3-3 as the home server to the wireless server A 3-1. This is performed so that the home server understands which wireless server is now controlling the terminal unit 5.

With this operation, the terminal unit 5 moves so as to be under the control of another wireless server.

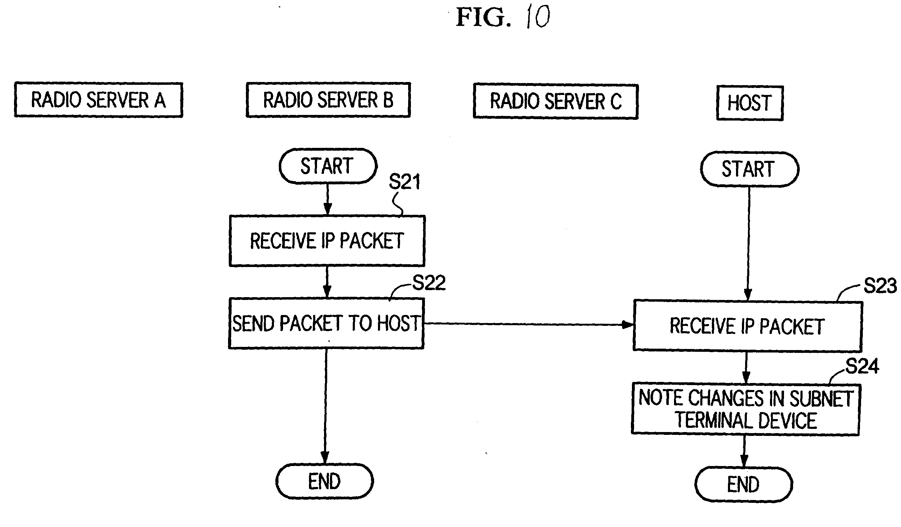

With reference to Figs. 6 and 8, the operation of the host server 1 for transmitting a packet to the terminal unit 5 is described.

The host server 1 transmits an IP packet via the network 2 (step S11 in Fig. 8). At this moment, the host server 1 does not know that the terminal unit 5 is under the control of the wireless server B 3-2. Thus, the transmission packet from the host server 1 is transmitted to the wireless server A 3-1 to which the terminal unit 5 was previously connected (symbol (c) in Fig. 6).

The wireless server A 3-1 receives the packet (step S12 in Fig. 8) and routes the packet to the wireless server B 3-2 so that it will be transmitted to the wireless server B 3-2 (step S13 in Fig. 8 and symbol (d) in Fig. 6). The wireless server B 3-2 receives the packet (step S14 in Fig. 8). The wireless server B 3-2 routes the packet to the mobile 5a of the terminal unit 5 which is under the control thereof (step S15 in Fig. 8), and transmits the packet to the mobile 5a (symbol (e) in Fig. 6). Also, the packet is transmitted to the terminal 5b (symbol (f) in Fig. 6).

Accordingly, the terminal unit 5 receives the packet transmitted from the host server 1.

Referring now to Figs. 6, 9, and 10, the operation of the terminal unit 5 for transmitting the packet to the host server 1 is described.

The terminal 5b transmits the packet to the mobile 5a (symbol (g) in Fig. 6). The mobile 5a transmits the received packet via the wireless server B 3-2.

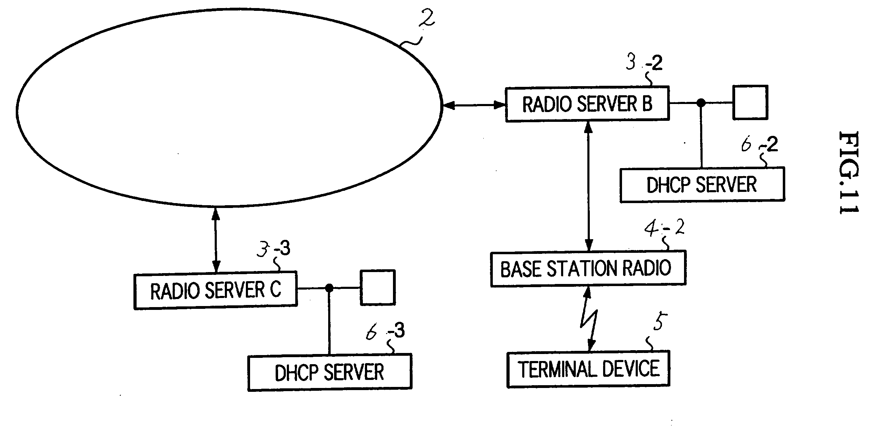

The wireless server B 3-2 receives the packet (step S21 in Fig. 10), routes it to the host server 1, and transmits the IP packet received from the terminal unit 5 to the host server 1 (symbol (i) in Fig. 6 and step S22 in Fig. 10).

The host server 1 receives the packet (step S23 in Fig. 9). At this moment, the host server 1 will know that the terminal unit 5 is now under the control of the wireless server B 3-2 based on the address of the source of the packet (step S24 in Fig. 9). Subsequently, packets to the terminal unit 5 are transmitted directly to the wireless server B 3-2.

When the host server 1 transmits the packet to the wireless server B 3-2, the host server 1 first sends the packet to the wireless server B 3-2 (symbol (j) in Fig. 6 and step S31 in Fig. 9).

The wireless server B 3-2 receives the packet (step S32 in Fig. 9) and routes it to the terminal unit 5 (step S33 in Fig. 9). Hence, the packet is transmitted to the mobile 5a (symbol (k) in Fig. 6). Also, the packet is transmitted to the terminal unit 5 (symbol (1) in Fig. 6).

When the packet is transmitted to or received from the terminal unit 5, the IP packet is forwarded. It is not necessary to notify all the hosts about the moving of the terminal unit 5 every time the terminal unit 5 moves, thus preventing concentrated traffic of communication links.

Referring to Fig. 11, an IP address issuing operation is described.

When moved into the communication area covered by the wireless server B 3-2, the terminal unit 5 requests the wireless server B 3-2 to issue an IP address.

The wireless server B 3-2 indexes the home wireless server (in this embodiment, the wireless server C is the home server) of the terminal unit 5 that has made the request. The wireless server B 3-2 then requests the wireless server C 3-3 to issue the IP address.

A request for allocating the IP address is made to a dynamic host configuration protocol (DHCP) server 6-3 (the server that issues the IP address) connected to the wireless server C 3-3 (the home server). In response to this request, the DHCP server 6-3 issues an IP address available at that time, and notifies the issued IP address to the wireless server C 3-3.

The wireless server C 3-3 passes the issued IP address via the wireless server B 3-2 to the terminal unit 5.

When the terminal unit B 3-2 is the home server of the terminal unit 5, the DHCP server 6-2 issues the IP address.

With this operation, the IP address issued by the wireless server C 3-3 may be used for the terminal unit 5 that operates under the control of the wireless server B 3-2. Therefore, the terminal unit 5 operates as if it is under the control of the wireless server C 3-3. The packet is thereby transmitted via the wireless server B 3-2 to the terminal unit 5.

Accordingly, in response to the IP address issue request from the terminal unit 5, if the wireless server to which the terminal unit 5 is currently to be connected is not the home wireless server, the IP address is issued via this wireless server by the home wireless server. Thus, the terminal unit 5 may be connected to another wireless server without changing the setting of the IP address of the terminal unit 5.

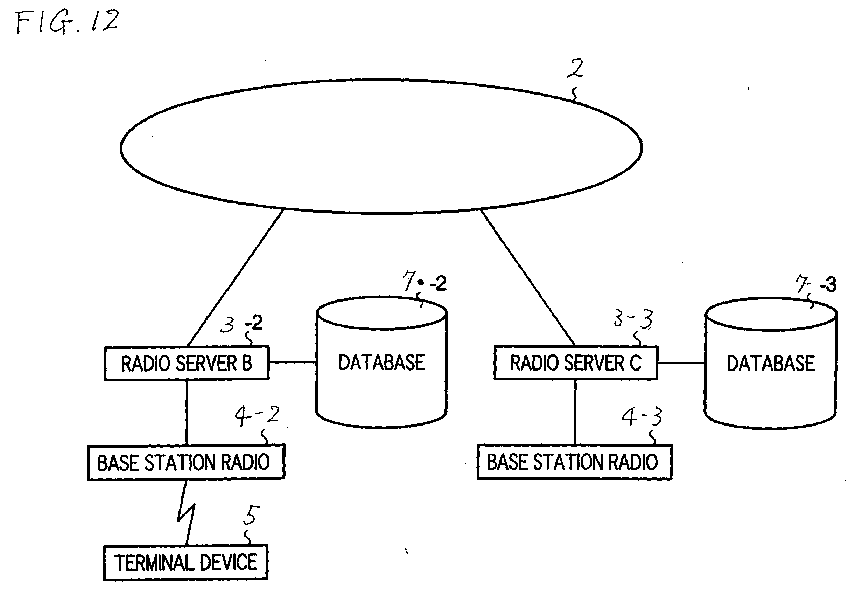

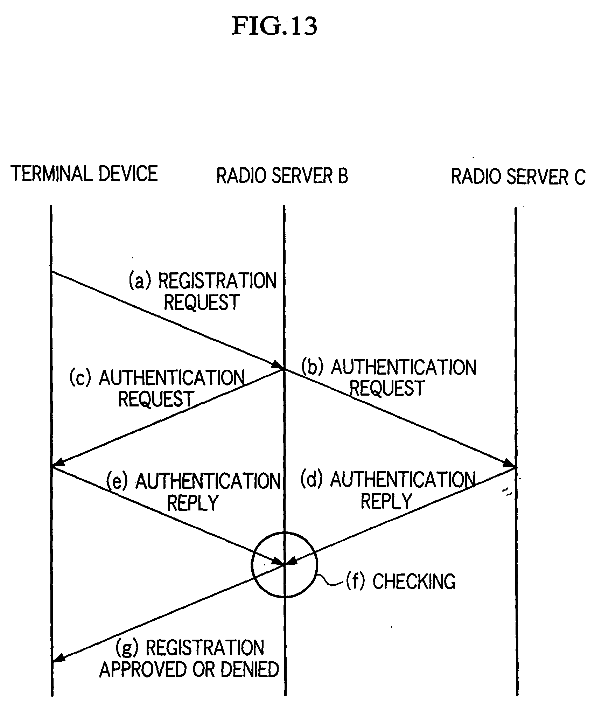

Referring now to Figs. 12 and 13, the operation of registration authentication is described.

The terminal unit 5 sends a registration request (symbol (a) in Fig. 13) and the identification number of the terminal unit 5 to the wireless server B 3-2.

The wireless server B 3-2 searches whether the authentication data of the terminal unit 5, for which the request has made, exists in a database 7-2 connected thereto. If the search result is negative, it is determined that the terminal unit 5 does not belong to the wireless server B 3-2 as the home server. The wireless server B 3-2 then indexes the home server of the terminal unit 5 based on the received identification number, and sends an authentication request to the indexed home server (the wireless server C 3-3 in this example) (symbol (b) in Fig. 13).

Simultaneously, a random value generated by the wireless server B 3-2 and the identification number of the terminal unit 5 that has made the registration request are added to the authentication request. Also, the random value is sent to the terminal unit 5 (symbol (c) in Fig. 13).

The wireless server C 3-3 as the home serer receives the authentication request, and computes authentication processing based on the random value and the identification number received at the same time.

The wireless server C 3-3 sends back the result of the authentication processing to the wireless server B 3-2 (symbol (a) in Fig. 13).

The terminal unit 5 computes the authentication processing based on the random value received from the wireless server B 3-2, and then sends back the result to the wireless server B 3-2 (symbol (e) in Fig. 13).

The wireless server B 3-2 checks the authentication processing results received from the wireless server B 3-3 and from the terminal unit 5 (symbol (f) in Fig. 13). If the results are the same, the registration request is approved (symbol (g) in Fig. 13). If the results do not coincide with each other, they are regarded as invalid, and the registration request is rejected.

If the authentication data is in the database 7-2, this wireless server is the home server. Therefore, the authentication operation only requires the following steps: the "registration request" (symbol (a) in Fig. 13), the "authentication request" (symbol (c) in Fig. 13), the "authentication response" (symbol (e) in Fig. 13), and the "registration acceptance" (symbol (g) in Fig. 13).

Accordingly, the terminal registration may be authenticated even if the terminal unit 5 is not under the control of the wireless server as the home server.

Use of the above wireless communication system permits communication in an area after the mobile terminal has moved. This is applicable to message communication (electronic mail, internet news, and file transfer protocol (FTP)), voice mail, web delivery, computer telephony integration (CTI) (internet telephone), synchro-communication, telemetering, and an intelligent transport system (ITS) (advanced road transportation system). With the routing function, the wireless communication system may be applied to push-type communication.

The base station wireless apparatus according to one embodiment and the wireless communication system in which the base station wireless apparatus are employed according to one embodiment of the present invention are described hereinabove. However, it will be understood by those skilled in the art that it is not intended to limit the invention to those embodiments.

The wireless communication system of the present invention may utilize networks, such as the Internet, an intranet, a local area network (LAN), and a dial-up network.

An electrical field intensity obtaining program may be recorded in a computer-readable medium for causing a computer system to execute the program in a mobile wireless apparatus, so that the mobile wireless apparatus obtains the electrical field intensity.

Specifically, the above electrical field obtaining program causes the computer to execute an analyzing function for analyzing a packet sent from the base station wireless apparatus, a determining function for determining the destination of the packet, a detecting function for detecting the electrical field intensity of a transmission channel of another base station wireless apparatus during sending of the packet when the destination of the packet is not the mobile wireless apparatus, and a recording function for recording the detected electrical field intensity.

An index addition program may be recorded in a computer-readable medium for causing a computer system to execute the program in a base station wireless apparatus, so that the base station wireless apparatus adds the index.

Specifically, the above index addition program causes the computer to execute an obtaining function for obtaining positional information in accordance with a distance between the base station wireless apparatus and another peripheral terminal station wireless apparatus, an adding function for adding an index to channel information included in a transmission packet based on the positional information in accordance with the distance between the base station wireless apparatuses, and a sending function for sending the transmission packet including the channel information to which the index is added.

The "computer system" in the above description includes an operating system (OS) and hardware, such as peripheral equipment. The "computer-readable recording medium" refers to a portable medium, such as a floppy disk, a magneto-optical disk, a ROM, a CD-ROM, and to a storage device, such as a hard disk which is built into the computer system. The "computer-readable recording medium" further includes a storage device that dynamically stores a program for a short period of time, such as a communication link employed when sending a program via networks, e.g., the Internet, and communication links, e.g., telephone lines. Also, the "computer-readable recording medium" includes a storage device that stores a program for a predetermined period of time, such as a volatile memory in the computer system as a server or a client. The programs described above may cause the computer to execute some of the above functions, or alternatively, they may be combined with a program that has been recorded in advance in the computer system to execute all the functions.

While the preferred embodiments of the present Invention are described with reference to the accompanying drawings, it is to be understood that various changes and modifications may be made without departing from the scope of the invention.

## Claims

1. A mobile wireless apparatus (M) for performing wireless communication with a base station wireless apparatus (A), thus establishing a link between a terminal unit and the Internet, in a wireless communication system including at least one wireless server connected to the Internet and said base station wireless apparatus (A) connected to the wireless server, which performs wireless communication, said mobile wireless apparatus (M) characterized in that:
said mobile wireless apparatus (M) receives first data (RCCH) including destination information, which form a transmission packet transmitted by said base station wireless apparatus (A) currently connected thereto by radio, and detects and determines a destination;
said mobile wireless apparatus (M) receives, when the destination of the transmission packet is not said mobile wireless apparatus (M), a transmission channel of another base station wireless apparatus whose communication area is adjacent to that of said base station wireless apparatus (A) during sending of second data (CCCH/UPCH) subsequent to the first data (RCCH), the second data (CCCH/UPCH) forming the transmission packet: and
said mobile wireless apparatus (M) detects and obtains electrical field intensity of the transmission channel.

2. A mobile wireless apparatus (M)according to Claim 1, characterized in that:
when it is determined that the destination of the transmission packet is said mobile wireless apparatus (M), said mobile wireless apparatus (M) obtains and stores channel information of the other base station wireless apparatus whose communication area is adjacent to that of said base station wireless apparatus (A), if the channel information is included in the second data (CCCH/UPCH); and
when it is determined that the destination of the transmission packet is not said mobile wireless apparatus (M), said mobile wireless apparatus (M) receives a transmission channel of the other base station wireless apparatus based on the channel information.

3. A mobile wireless apparatus (M) according to one of Claims 1 and 2, characterized in that:
said mobile wireless apparatus (M) stores information on the measured electrical field intensity of the transmission channel; and
said mobile wireless apparatus (M) detects a communicable base station wireless apparatus based on the information of the electrical field intensity when said mobile wireless apparatus (M) moves outside the communication area covered by said base station wireless apparatus (A).

4. A mobile wireless apparatus (M) according to Claim 3, characterized by further comprising:
receiving means (Ma) for receiving a radio signal and outputting received data, the receiving means (Ma) detecting electrical field intensity of the received radio signal and outputting electrical field intensity data;
phase locked loop (PLL) means (Mb) connected to the receiving means (Ma), the PLL means (Mb) switching a reception channel of the receiving means (Ma);
storage means (Mf) for storing channel information of said base station wireless apparatus (A) and the electrical field intensity data:
electrical field intensity obtaining means (Me) for storing the electrical field intensity data in the storage means (Mf);
first data analyzing means (Mc) for obtaining a destination of the received data from the first data (RCCH), for giving a timing signal for storing the electrical field intensity data to the electrical field intensity obtaining means (Me), and for causing the PLL means (Mb) to switch the reception channel of the receiving means (Ma); and
second data analyzing means (Md) for obtaining channel information of the other base station wireless apparatus from the second data (CCCH/UPCH) and for storing the channel information in the storage means (Mf).

5. A base station wireless apparatus (A) in a wireless communication system including at least one wireless server connected to the Internet and said base station wireless apparatus (A) connected to the wireless server, which performs wireless communication with a mobile wireless apparatus (M) connected to a terminal unit, said base station wireless apparatus (A) characterized in that said base station wireless apparatus (A) adds an index to channel information of another base station wireless apparatus whose communication area is adjacent to that of said base station wireless apparatus (A), the channel information being included in a transmission packet to be transmitted, in accordance with the distance between said base station wireless apparatus (A) and the other base station wireless apparatus.

6. A computer-readable medium for causing a computer to execute an electrical field intensity obtaining program in a mobile wireless apparatus (M), said computer-readable medium characterized in that the program comprises the steps of:
analyzing a packet transmitted from a base station wireless apparatus (A);
determining a destination of the packet; and
detecting and storing an electrical field intensity of a transmission channel of another base station wireless apparatus during sending of the packet when the destination of the packet is not said mobile wireless apparatus (M).

7. A computer-readable medium for causing a computer to execute an index addition program in a base station wireless apparatus (A), said computer-readable medium characterized in that the program comprises the steps of:
obtaining positional information in accordance with a distance between said base station wireless apparatus (A) and another peripheral base station wireless apparatus;
adding an index to channel information included in a transmission packet based on the positional information in accordance with the distance between said base station wireless apparatuses (A) and the other peripheral wireless apparatus; and
transmitting the transmission packet including the channel information to which the index is added.
